# EUROPÄISCHE PATENTANMELDUNG

(11) **EP 3 706 038 A1**
(43) Veröffentlichungstag der Anmeldung: **09.09.2020**
(21) Anmeldenummer: 20160364.4
(22) Anmeldetag: 02.03.2020
(51) Int. Cl.: G06K 9/00, B60R 1/00

(54) **KRAFTFAHRZEUG MIT EINER MEHRZAHL VON SENSOREINRICHTUNGEN ZUR UMFELDERFASSUNG**

(30) Priorität: 07.03.2019 DE 102019105790
(71) Anmelder: MAN Truck & Bus SE, 80995 München (DE)
(72) Erfinder: Braun, Reimar, 80995 München (DE)
(74) Vertreter: v. Bezold & Partner Patentanwälte - PartG mbB

(57) **Zusammenfassung**

Die Erfindung betrifft ein Kraftfahrzeug (10), vorzugsweise ein Nutzfahrzeug, mit einer Mehrzahl von Sensoreinrichtungen zur Umfelderfassung. Die Mehrzahl von Sensoreinrichtungen soll dabei zumindest eine Bilderfassungseinrichtung (1a, 1b) eines Birdview-Systems oder eines Spiegelersatz-Systems umfassen. Zusätzlich dazu umfasst das erfindungsgemäße Kraftfahrzeug (10) eine Auswerteeinrichtung (2), die ausgebildet ist, auf Basis von Sensordaten der Mehrzahl von Sensoreinrichtungen eine Objekterkennung durchzuführen. Ferner weist das Kraftfahrzeug (10) eine Steuereinrichtung (3) auf, die ausgebildet ist, in Abhängigkeit von einem Vorliegen einer vorbestimmen Betriebsbedingung eine Teilmenge der Mehrzahl von Sensoreinrichtungen auszuwählen, auf deren Basis die Objekterkennung erfolgt. Auf vorteilhafte Weise wird dadurch insgesamt eine bedarfsgerechte Nutzung der vorhandenen Sensoreinrichtungen zur Umfelderfassung erreicht, da durch das Verzichten auf eine Auswertung aktuell weniger relevante Umfeldbereiche Rechenkapazität eingespart werden kann.

## Beschreibung

Die Erfindung betrifft ein Kraftfahrzeug, vorzugsweise ein Nutzfahrzeug, mit einer Mehrzahl von Sensoreinrichtungen zur Umfelderfassung. Insbesondere betrifft die Erfindung ein Kraftfahrzeug mit zumindest einer Bilderfassungseinrichtung eines Birdview- oder Spiegelersatz-Systems.

Heutige Kraftfahrzeuge weisen zum Erfassen der Fahrzeugumgebung bzw. zum Erkennen möglicher sich dort befindlicher Objekte oftmals eine Reihe verschiedener Sensoreinrichtungen auf. So ist z. B. in diesem Zusammenhang bekannt, Sensordaten von elektromagnetischen (Radar), akustischen (Ultraschall) und/oder optischen (Lidar, Infrarot, Laser) Sensoren zur Objekterkennung zu nutzen. Zudem oder alternativ werden im Stand der Technik auch videobasierte Sensoreinrichtungen, wie beispielsweise Front- und/oder Heckkameras bzw. Bird-View- und/oder Spiegelersatz-Systeme, zur Umfelderfassung verwendet. Die Sensor- bzw. Bilddaten der letztgenannten Systeme werden dabei allerdings meist nur (ggf. zusätzlich bearbeitet) auf einer für den Fahrer einsehbaren Anzeigeeinrichtungen dargestellt, ohne das unmittelbar eine Objekterkennung auf Basis dieser Daten erfolgt.

Entsprechend verfolgen die bisherigen Systeme zur Umfelderfassung meist eine ausschließlich getrennte Nutzung der Sensordaten für den einen oder andern Zweck (nur Anzeige bzw. nur Objekterkennung). Nachteilig daran ist, dass dadurch die insgesamt verfügbaren Informationen nicht optimal genutzt werden können. Dieser Ansatz wird allerdings auch dadurch bedingt, dass einer gesamtheitliche Verwendung bzw. Fusionierung aller verfügbaren Sensorinformationen aufgrund der damit einhergehenden enormen Datenmenge die Rechenleistung heutzutage im Kraftfahrzeugbereich verwendeter Recheneinheiten übersteigen würde.

Entsprechend ist daher Aufgabe der Erfindung eine Lösung bereitzustellen, mit der im Vergleich zu den bisherigen Systemen eine verbesserte und umfassendere Nutzung der Umfelddaten erreicht werden kann. Insbesondere ist es dabei eine Aufgabe der Erfindung eine Lösung bereitzustellen mit der eine bedarfsgerechte Nutzung der vorhandenen Sensordaten ermöglicht wird, wobei die im Fahrzeug vorhandene Rechenkapazität möglichst effizient genutzt werden soll.

Diese Aufgaben werden durch ein Kraftfahrzeug mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Der Grundgedanke der Erfindung ist dabei, dass nicht in jeder Betriebssituation des Kraftfahrzeugs alle Sensoreinrichtungen gleich relevant für die Fahrzeugführung sind. Beispielsweise sind im Falle einer Rückwärtsfahrt vorrangig heckseitig orientierte Sensoreinrichtungen von Bedeutung, während die Daten einer z. B. ebenfalls vorhandenen Frontsichtkamera nicht unmittelbar benötigt werden. Entsprechend kann durch eine entsprechende situationsabhängige Priorisierung bzw. Teilauswahl der Sensoreinrichtungen eine effiziente Nutzung erreicht werden. Ferner kann in diesem Zusammenhang die Rechenleistung aktuell nicht unmittelbar verwendeter Systeme (z. B. die Frontsichtkamera im obigen Beispiel) dann für die Datenauswertung verwendet werden.

Hierzu weist das erfindungsgemäße Kraftfahrzeug - vorzugsweise ein Nutzfahrzeug - eine Mehrzahl von Sensoreinrichtungen zur Umfelderfassung auf. Mit anderen Worten kann das Kraftfahrzeug zumindest zwei Sensoreinrichtungen umfassen, die ausgebildet sind, jeweils Sensordaten über einen bestimmten Raumbereich um das Kraftfahrzeug (z. B. einen Front-, Heck- und/oder Seitenbereich) zu detektieren. Die Mehrzahl von Sensoreinrichtungen soll dabei vorzugsweise zumindest eine Bilderfassungseinrichtung (z. B. eine Kameraeinrichtung) eines Birdview-Systems oder eines Spiegelersatz-Systems umfassen. Unter einem Birdview-System kann in diesem Zusammenhang ein Fahrerassistenzsystem verstanden werden, bei welchem dem Fahrer ein (künstliches) Bild seiner Fahrzeugumgebung und/oder seines Kraftfahrzeugs aus der Vogelperspektive geboten wird. Demgegenüber soll ein Spiegelersatzsystem ein Fahrerassistenzsystem bezeichnen, bei dem Spiegeleinrichtungen für eine indirekte Sicht durch Kameras bzw. Bildaufnahmeeinheiten ersetzt und/oder ergänzt werden.

Zusätzlich dazu umfasst das erfindungsgemäße Kraftfahrzeug eine Auswerteeinrichtung, die ausgebildet ist, auf Basis von Sensordaten der Mehrzahl von Sensoreinrichtungen eine Objekterkennung durchzuführen. Dabei können an sich im Stand der Technik bekannte Methoden der Muster- bzw. Objekterkennung verwendet werden, die z. B. ein Identifizieren und vorzugsweise auch ein Lokalisieren von Objekten in der Fahrzeugumgebung ermöglichen. Beispielsweise können hierbei Methoden, die auf einer Kanten-, Größen-, Form- und/oder Farberkennung basieren, eingesetzt werden. Zudem oder alternativ können auch Techniken des Machine-Learnings und/oder des Deep-Learnings Anwendung finden.

Ferner weist das Kraftfahrzeug eine Steuereinrichtung auf, die ausgebildet ist, in Abhängigkeit von einem Vorliegen einer vorbestimmen Betriebsbedingung eine Teilmenge der Mehrzahl von Sensoreinrichtungen auszuwählen, auf deren Basis die Objekterkennung erfolgt. Mit anderen Worten kann die Steuereinrichtung ausgebildet sein, die Art und Anzahl an Sensoreinrichtungen festzulegen, deren Sensordaten einer Objekterkennung zugeführt werden sollen, wobei die vorbestimme, d. h. zuvor festgelegte, Betriebsbedingung z. B. ein Einlegen eines Rückwärtsgangs des Kraftfahrzeugs sein kann. Vorzugsweise ist die ausgewählte Teilmenge, welche auch als Auswahl bezeichnet werden kann, dabei eine echte Teilmenge aller Sensoreinrichtungen des Kraftfahrzeugs. Die Teilmenge kann jedoch auch alle Sensoreinrichtungen des Kraftfahrzeugs umfassen. Weiterhin kann die Auswahl einer Teilmenge in erster Linie die rechenintensive Objekterkennung betreffen. D. h. unabhängig von der getroffenen Auswahl können die Sensordaten auch nicht ausgewählter Sensoreinrichtungen weiterhin z. B. angezeigt und/oder in sonstiger Weise genutzt bzw. verarbeitet werden.

Auf vorteilhafte Weise wird dadurch insgesamt eine bedarfsgerechte Nutzung der vorhandenen Sensoreinrichtungen zur Umfelderfassung erreicht, da durch das Verzichten auf eine Auswertung aktuell weniger relevante Umfeldbereiche Rechenkapazität eingespart werden kann.

Gemäß einem ersten Aspekt der Erfindung kann die vorbestimmte Betriebsbedingung eine vorbestimmte Fahrsituation sein. Beispielsweise kann die vorbestimmte Fahrsituation ein Abbiegen, ein Anfahren, ein Rangieren, ein Vorwärtsfahren und/oder ein Rückwärtsfahren sein. Eine Ermittlung, ob eine derartige vorbestimmte Fahrsituation vorliegt, kann z. B. auf Basis sensorisch erfasster Fahrzeugparameter, beispielsweise eine Fahrzeuggeschwindigkeit und/oder eine Gangwahl, erfolgen.

Nach einem weiteren Aspekt der Erfindung kann die vorbestimmte Betriebsbedingung auch eine Gangwahl, ein Lenkradeinschlag und/oder eine Betätigung eines Fahrtrichtungsanzeigers des Kraftfahrzeugs sein. Auch in diesem Zusammenhang kann das Kraftfahrzeug zur Ermittlung, ob eine derartige vorbestimmte Betriebsbedingung vorliegt, entsprechende Sensoren (z. B. Gangwahlsensor, Lenkwinkelsensor, etc.) umfassen. Gerade die vorgenannten Betriebsbedingungen ermöglichen erfahrungsgemäß verlässlich auf eine aktuell und/oder zukünftig relevante Sensornutzung zu schließen, weshalb sich hierdurch auf vorteilhafte Weise eine bedarfsgerechte Nutzung der Sensordaten erreichen lässt.

Gemäß einem weiteren Aspekt der Erfindung kann die Auswerteeinrichtung als zentrale Auswerteeinrichtung ausgebildet sein, wobei sensorseitig keine Sensordatenauswertung zur Objekterkennung erfolgt. Mit anderen Worten soll die Mehrzahl von Sensoreinrichtungen z. B. keine "smarten" bzw. "intelligenten" Sensoren mit eigenen Recheneinheiten zur Sensordatenauswertung, Bilddatenauswertung und/oder Objekterkennung umfassen. Vorzugsweise ist die Mehrzahl von Sensoreinrichtungen somit lediglich zur Übermittlung von Sensorrohdaten an die zentrale Auswerteeinrichtung ausgebildet. Dort kann dann zentral eine Fusionierung und/oder sonstige Bearbeitung der Sensordaten erfolgen, um dadurch ein Identifizieren und/oder Lokalisieren von Objekten (Personen, Tiere und/oder Gegenstände) in der Fahrzeugumgebung zu ermöglichen. Auf vorteilhafte Weise wird durch die Bündelung der Datenbearbeitung in einer zentralen Recheneinheit eine kostengünstige Möglichkeit zur Objekterkennung bereitgestellt, da auf entsprechend "intelligente" und damit teure Sensoreinrichtungen verzichtet werden kann.

Alternativ dazu kann nach einem weiteren Aspekt der Erfindung die Auswerteeinrichtung auch als dezentrale Auswerteeinrichtung ausgebildet sein, die eine Mehrzahl von dezentralen Recheneinheiten umfasst. Die mehreren, d. h. zumindest zwei, dezentralen Recheneinheiten können dabei vorzugsweise räumlich verteilt im Kraftfahrzeug angeordnet sein. Ferner kann eine der Recheneinheiten als Master-Recheneinheit und die anderen Recheneinheiten jeweils als Slave-Recheneinheiten ausgebildet sein. Weiterhin kann die Steuereinrichtung ausgebildet sein, vorzugsweise in Abhängigkeit vom Vorliegen einer vorbestimmen Betriebsbedingung, eine Teilmenge der Mehrzahl von dezentralen Recheneinheiten zur Durchführung der Objekterkennung festzulegen. Mit anderen Worten kann die Steuereinrichtung eine oder mehrere Recheneinheiten auswählen, die die Auswertung der entsprechenden Sensordaten zur Objekterkennung durchführen. Vorzugsweise ist die dabei festgelegte Teilmenge eine echte Teilmenge aller Recheneinheiten des Kraftfahrzeugs. Die Teilmenge kann jedoch auch alle Recheneinheiten des Kraftfahrzeugs umfassen. Auf vorteilhafte Weise wird durch die dezentrale Ausgestaltung insgesamt die Betriebssicherheit erhöht, da im Fehlerfall einer Recheneinheit, deren Leistung durch ein oder mehrere andere Recheneinheiten kompensiert werden kann.

Hierbei kann die Mehrzahl von dezentralen Recheneinheiten zumindest eine sensorseitig integrierte Recheneinheit umfassen, die ausgebildet ist, auf Basis von Sensordaten eine Objekterkennung durchzuführen. Mit anderen Worten kann das Kraftfahrzeug zumindest eine Sensoreinrichtung mit einer eigenen Recheneinheit zur Objekterkennung umfassen. Diese Recheneinheit kann dabei in einem Gehäuse der Sensoreinrichtung angeordnet sein und/oder in sonstiger Weise einer bestimmten Sensoreinrichtung zugeordnet sein. Beispielsweise kann es sich in diesem Zusammenhang um eine "smarte" bzw. "intelligente" Sensoreinrichtung handeln. Hierbei kann die Mehrzahl von dezentralen Recheneinheiten mehrere, d. h. zwei oder mehr, sensorseitig integrierte Recheneinheiten umfassen. Ferner können die jeweiligen sensorseitig integrierten Recheneinheiten ausgebildet sein, auf Basis von Sensordaten der jeweils zugehörigen Sensoreinrichtung eine Objekterkennung durchzuführen. Vorzugsweise ist die sensorseitig integrierte Recheneinheit jedoch ausgebildet, auf Basis von Sensordaten der Mehrzahl von Sensoreinrichtungen eine Objekterkennung durchzuführen. Auf vorteilhafte Weise kann dadurch die im Kraftfahrzeug insgesamt vorhandene Rechenkapazität möglichst effizient genutzt werden.

Besonders vorteilhaft ist diese Variante, falls es sich bei der ausgewählten Recheneinheit um eine sensorseitig integrierte Recheneinheit einer aktuell nicht unmittelbar zur Umfelderfassung benötigten und/oder ausgewählten Sensoreinrichtung handelt. Entsprechend kann zur Durchführung der Objekterkennung zumindest eine sensorseitig integrierte Recheneinheit einer Sensoreinrichtungen festgelegt werden, die nicht in der ausgewählten Teilmenge der Sensoreinrichtungen enthalten ist. Beispielsweise kann im Falle einer Rückwärtsfahrt die Recheneinheit einer "intelligenten" Frontsichtkamera und/oder eines "intelligenten" Frontradars, deren Bild- bzw. Sensordaten bei dieser Betriebssituation (Rückwärtsfahrt) nicht zur Objekterkennung verwendet werden, zur Durchführung der Berechnungen der Objekterkennung festgelegt werden. Auf vorteilhafte Weise können dadurch die im Kraftfahrzeug vorhandenen Recheneinheiten möglichst optimal genutzt werden.

Gemäß einem weiteren Aspekt der Erfindung kann die Auswerteeinrichtung ausgebildet sein, die Sensordaten der ausgewählten Teilmenge der Mehrzahl von Sensoreinrichtungen zu einem gemeinsamen Umfeldmodell des Kraftfahrzeugs zu fusionieren. Als Umfeldmodell können hierbei die zusammengetragenen bzw. aufbereiteten Informationen der Sensoreinrichtungen hinsichtlich anderer Verkehrsteilnehmer, Infrastruktur, statische Objekte, Straßenverhältnisse etc. - d. h. der Fahrzeugumgebung - verstanden werden. Hierzu können im Stand der Technik bekannte Methoden, wie beispielsweise gitterbasierte und/oder objektbasierte Verfahren zur Umfeldmodellierung verwendet werden. Die Fusionierung zu einem gemeinsamen Umfeldmodell des Kraftfahrzeugs kann dabei insbesondere auch unabhängig davon erfolgen, ob die Auswerteeinrichtung als zentrale oder dezentrale Auswerteeinrichtung ausgebildet ist. Auf vorteilhafte Weise kann durch die Kombination bzw. Fusion der Sensordaten insgesamt eine genauere Erfassung von Objekten erreicht werden, wodurch sich insgesamt die Betriebssicherheit erhöht.

Nach einem weiteren Aspekt der Erfindung kann die Mehrzahl von Sensoreinrichtungen zumindest eine Frontsichtkamera umfassen. Als Frontsichtkamera soll dabei eine Kamera verstanden werden, deren Sichtfeld im Wesentlichen in normaler Fahrtrichtung orientiert ist. Die Frontsichtkamera kann hierbei ein Teil des Birdview-Systems sein. D. h. die Frontsichtkamera kann eine Bilderfassungseinrichtung eines Birdview-Systems sein. Zudem oder alternativ kann die Mehrzahl von Sensoreinrichtungen auch zumindest ein Frontradar umfassen. Als Frontradar soll dabei eine Radareinrichtung verstanden werden, deren Sichtfeld im Wesentlichen in normaler Fahrtrichtung orientiert ist. Vorzugsweise ist die Frontsichtkamera und/oder das Frontradar dabei Teil eines Notbremsassistenz-Systems und/oder eines Adaptive-Cruise-Control-Systems. Diese - an sich im Stand der Technik bekannten - Fahrerassistenzsysteme nutzen üblicherweise Bilddaten der Frontsichtkamera und/oder des Frontradars zur Erkennung vor dem Kraftfahrzeug befindlicher Objekte bzw. vorausfahrende Kraftfahrzeuge, um auf dieser Basis dieser Ermittlung eine Geschwindigkeitsregelung bzw. Kollisionsvermeidung vorzunehmen.

Hierbei kann die Steuereinrichtung ferner ausgebildet sein, im Falle einer Vorwärtsfahrt des Kraftfahrzeugs, vorzugsweise ausschließlich, die Frontsichtkamera und/oder das Frontradar als Teilmenge der Sensoreinrichtungen auszuwählen, auf deren Basis die Objekterkennung erfolgt. Die zumindest eine Bilderfassungseinrichtung des Birdview- oder Spiegelersatz-Systems des Kraftfahrzeugs soll somit nicht in der ausgewählten Teilmenge enthalten sein. Allerdings kann hierbei ein Anzeigen von Bilddaten der zumindest eine Bilderfassungseinrichtung des Birdview- oder Spiegelersatz-Systems erfolgen. Hierzu kann das Kraftfahrzeug eine entsprechende, vorzugsweise im Innenraum des Kraftfahrzeugs angebrachte, Anzeigevorrichtung (z. B. einen Bildschirm) umfassen.

Zudem oder alternativ kann die Steuereinrichtung ausgebildet sein, im Falle eines Abbiegevorgangs des Kraftfahrzeugs, vorzugsweise ausschließlich, die zumindest eine Bilderfassungseinrichtung eines Birdview- oder Spiegelersatz-Systems und die Frontsichtkamera und/oder das Frontradar als Teilmenge der Sensoreinrichtungen auszuwählen, auf deren Basis die Objekterkennung erfolgt. Vorzugsweise erfolgt dabei eine Fusionierung der Sensordaten der verschiedenen Sensoreinrichtungen zu einem gemeinsamen Umfeldmodell des Kraftfahrzeugs.

Zudem oder alternativ kann die Steuereinrichtung ausgebildet sein, im Falle einer Rückwärtsfahrt des Kraftfahrzeugs ausschließlich die zumindest eine Bilderfassungseinrichtung eines Birdview- oder Spiegelersatz-Systems als Teilmenge der Sensoreinrichtungen auszuwählen, auf deren Basis die Objekterkennung erfolgt. Die Frontsichtkamera und/oder das Frontradar des Kraftfahrzeugs soll somit nicht in der ausgewählten Teilmenge enthalten sein. Insgesamt wird durch die vorgenannten Betriebsmodi auf vorteilhafte Weise eine bedarfsgerechte Nutzung der vorhandenen Sensoreinrichtungen zur Umfelderfassung erreicht, wobei durch das Verzichten auf eine Auswertung aktuell weniger relevante Umfeldbereiche Rechenkapazität eingespart werden kann.

Nach einem weiteren Aspekt der Erfindung kann die Frontsichtkamera und/oder das Frontradar ferner eine sensorseitig integrierte Recheneinheit umfassen. Diese kann dabei jeweils ausgebildet sein, auf Basis von Sensordaten der Mehrzahl von Sensoreinrichtungen eine Objekterkennung durchzuführen. Mit anderen Worten kann die in der Frontsichtkamera und/oder im Frontradar integrierte Recheneinheit jeweils ausgebildet sein, auch auf Basis von externen Sensordaten, d. h. Sensordaten anderer Sensoreinrichtungen (z. B. die der Bilderfassungseinrichtung des Birdview- oder Spiegelersatz-Systems), eine Objekterkennung durchzuführen. Der Ausdruck "sensorseitig integriert" kann dabei wiederum eine Recheneinheit bezeichnen, die z. B. in einem Gehäuse der Frontsichtkamera und/oder des Frontradars angeordnet ist und/oder in sonstiger Weise einer der jeweiligen Sensoreinrichtung zugeordnet ist. Auf vorteilhafte Weise wird durch diesen Aspekt eine platzsparende Unterbringung der Recheneinheiten bzw. der Auswerteeinrichtung erreicht.

Hierbei kann die Steuereinrichtung ferner ausgebildet sein, im Falle einer Rückwärtsfahrt des Kraftfahrzeugs, vorzugsweise ausschließlich, die zumindest eine Bilderfassungseinrichtung des Birdview- oder Spiegelersatz-Systems als Teilmenge der Sensoreinrichtungen auszuwählen, auf deren Basis die Objekterkennung erfolgt. Weiterhin kann die Steuereinrichtung ausgebildet sein, dabei die Recheneinheit der - vorzugsweise aktuell nicht verwendeten - Frontsichtkamera und/oder des - vorzugsweise aktuell nicht verwendeten - Frontradars zur Durchführung der Objekterkennung festzulegen. Mit anderen Worten können im Falle einer Rückwärtsfahrt des Kraftfahrzeugs die Sensordaten der zumindest einen Bilderfassungseinrichtung des Birdview- oder Spiegelersatz-Systems zur Objekterkennung genutzt werden, wobei die zugehörige Datenauswertung, d. h. die konkreten Berechnungen, zumindest teilweise auf der Recheneinheit der - aktuell nicht unmittelbar zur Objekterkennung genutzten - Frontsichtkamera und/oder des Frontradars erfolgt. Auf vorteilhafte Weise wird dadurch eine möglichst bedarfsgerechte Nutzung der vorhandenen Sensoreinrichtungen und Rechenkapazitäten erreicht.

Gemäß einem weiteren Aspekt der Erfindung kann die Mehrzahl von Sensoreinrichtungen zumindest eine Sensorik zur Totraumüberwachung vor dem Kraftfahrzeug umfassen. Als Sensorik zur Totraumüberwachung kann dabei eine Sensoreinrichtung zur Erfassung von Objekten in einem Nahbereich des Kraftfahrzeugs, vorzugsweise in einem Nahbereich unmittelbar vor dem Kraftfahrzeug, verstanden werden. Die Sensorik zur Totraumüberwachung kann beispielsweise ein oder mehrere Ultraschallsensoren umfassen. Zudem oder alternativ kann die Mehrzahl von Sensoreinrichtungen zumindest ein Seitenradar umfassen. Als Seitenradar soll dabei eine Radareinrichtung verstanden werden, deren Sichtfeld im Wesentlichen in senkrecht zur Fahrtrichtung orientiert ist.

Hierbei kann die Steuereinrichtung ferner ausgebildet sein, im Falle eines Anfahrens des Kraftfahrzeugs, vorzugsweise ausschließlich, die zumindest eine Sensorik zur Totraumüberwachung vor dem Kraftfahrzeug und/oder das zumindest eine Seitenradar als Teilmenge der Sensoreinrichtungen auszuwählen, auf deren Basis die Objekterkennung erfolgt. Als "Anfahren" kann dabei das nach einem vorherigen Fahrzeugstillstand "in Bewegung setzen" des Kraftfahrzeugs, vorzugsweise in Vorwärtsrichtung, verstanden werden. Auch durch diese Ausgestaltung wird auf vorteilhafte Weise eine möglichst bedarfsgerechte Nutzung der vorhandenen Sensoreinrichtungen und Rechenkapazitäten erreicht.

Die zuvor beschriebenen Aspekte und Merkmale der Erfindung sind dabei beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1:: Eine schematische Darstellung eines Kraftfahrzeugs in Draufsicht gemäß einer ersten Ausführungsform der Erfindung;
- Figur 2:: Eine schematische Darstellung eines Kraftfahrzeugs in Draufsicht gemäß einer zweiten Ausführungsform der Erfindung; und
- Figur 3:: Eine schematische Darstellung eines Kraftfahrzeugs in Seitenansicht gemäß einer dritten Ausführungsform der Erfindung.

Gleiche oder funktional äquivalente Elemente sind dabei in allen Figuren mit denselben Bezugszeichen bezeichnet und zum Teil nicht gesondert beschrieben.

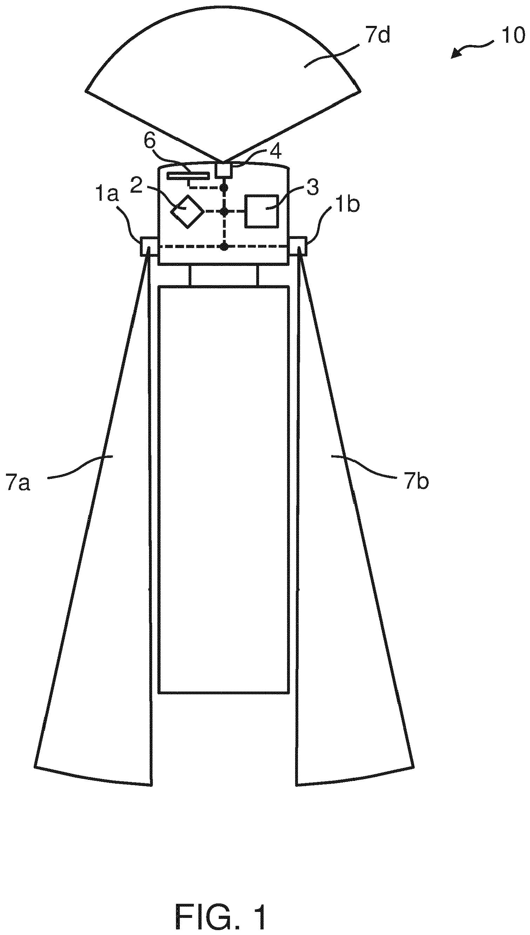

Figur 1 zeigt eine schematische Darstellung eines Kraftfahrzeugs 10 in Draufsicht gemäß einer ersten Ausführungsform der Erfindung. Bei dem Kraftfahrzeug 10 handelt es sich vorliegend um ein Sattelkraftfahrzeug, d. h. ein Gespann aus einer Sattelzugmaschine und einem Sattelanhänger. Das Kraftfahrzeug 10 umfasst zwei Bilderfassungseinrichtung 1a und 1b eines Spiegelersatz-Systems, wobei die beiden Bilderfassungseinrichtungen 1a und 1b beispielsweise in Form zweier Video-Kameras ausgeführt sein können. Die Bilderfassungseinrichtungen 1a und 1b sind ferner dazu ausgebildet, Bilddaten über einen Umfeldbereich 7a und 7b des Kraftfahrzeugs 10 zu erfassen. Vorliegend handelt es sich bei den von den beiden Bilderfassungseinrichtung 1a und 1b erfassten Umfeldbereichen 7a und 7b um jeweils einen Bereich, der herkömmlich durch den linken bzw. rechten Außenrückspiegel widergegeben wird. Anstelle dieser üblicherweise verwendeten Außenrückspiegel kann das Kraftfahrzeug 10 hierbei eine, vorzugsweise im Innenraum des Kraftfahrzeugs 10 angebrachte, Anzeigeeinrichtung 6 aufweisen, auf der die von den Bilderfassungseinrichtung 1a und 1b des Spiegelersatz-Systems erfassten (und ggf. zusätzlich bearbeitete) Bereiche für den Fahrer dargestellt werden. Darüber hinaus umfasst das Kraftfahrzeug 10 eine Frontsichtkamera 4, die ausgebildet ist einen weiteren Umfeldbereich 7c vor dem Kraftfahrzeug 10 zu erfassen. Insgesamt weist das vorliegende Kraftfahrzeug 10 damit drei Sensoreinrichtungen zur Umfelderfassung auf, wobei dies lediglich eine beispielhafte Ausgestaltung darstellt. Ohne den Bereich der Erfindung zu verlassen kann das Kraftfahrzeug 10 auch noch eine Reihe weiterer Sensoreinrichtungen zur Umfelderfassung, darunter z. B. Lidar-, Radar-, Laser- und/oder Ultraschallsensoren umfassen.

Zudem weist das vorliegende Kraftfahrzeug 10 eine Auswerteeinrichtung 2 auf, die ausgebildet ist, auf Basis von Sensordaten der Mehrzahl von Sensoreinrichtungen eine Objekterkennung durchzuführen. So kann die Auswerteeinrichtung 2 ausgebildet sein, auf Basis der Sensordaten der Bilderfassungseinrichtungen 1a und 1b sowie der Frontsichtkamera 4 zu erkennen, ob sich aktuell eine Person und/oder ein Gegenstand in einem Bereich vor, neben oder hinter dem Kraftfahrzeug 10 aufhält. Vorliegend ist die Auswerteeinrichtung 2 als zentrale Auswerteeinrichtung ausgeführt. D. h. die Sensordaten aller Sensoreinrichtungen werden an die zentrale Auswerteeinrichtung übermittelt und dort zur Objekterkennung ausgewertet, ohne das sensorseitig diesbezüglich eine Datenauswertung erfolgt. Mit anderen Worten soll es sich bei den Sensoren 1a, 1b und 4 z. B. nicht um "smarte" bzw. "intelligente" Kameraeinrichtungen mit eigenen Recheneinheiten zur Objekterkennung handeln.

Ferner umfasst das Kraftfahrzeug 10 eine Steuereinrichtung 3, die ausgebildet ist, in Abhängigkeit von einem Vorliegen einer vorbestimmen Betriebsbedingung eine Teilmenge der Mehrzahl von Sensoreinrichtungen auszuwählen, auf deren Basis die Objekterkennung erfolgt. Beispielsweise kann die Steuereinrichtung 3 ausgebildet sein, im Falle einer Vorwärtsfahrt des Kraftfahrzeugs 10 ausschließlich die Frontsichtkamera 4 als die Teilmenge der Sensoreinrichtungen auszuwählen, auf deren Basis die Objekterkennung erfolgt. Die Bilddaten der Bilderfassungseinrichtungen 1a und 1b des Spiegelersatz-Systems werden dann lediglich auf der Anzeigeeinrichtung 6 angezeigt, ohne das eine Objekterkennung auf Basis dieser Daten erfolgt. Ferner kann die Steuereinrichtung 3 ausgebildet sein, im Falle eines Abbiegevorgangs des Kraftfahrzeugs 10 nach links ausschließlich die Bilderfassungseinrichtung 1a des Spiegelersatz-Systems und die Frontsichtkamera 4 als die Teilmenge der Sensoreinrichtungen auszuwählen, auf deren Basis die Objekterkennung erfolgt. Die Bilddaten der Bilderfassungseinrichtung 1b werden in diesem Fall dann nicht zur Objekterkennung verwendet. Auf vorteilhafte Weise wird dadurch insgesamt eine bedarfsgerechte Nutzung der vorhandenen Sensoreinrichtungen zur Umfelderfassung erreicht, da durch das Verzichten auf eine Auswertung aktuell weniger relevante Umfeldbereiche Rechenkapazität eingespart werden kann. Die Steuereinrichtung 3 und die Auswerteeinrichtung 2 können dabei z. B. mittels entsprechender programtechnisch eingerichteter Mikroprozessoren realisiert sein und zudem vorzugsweise über entsprechende Speichereinrichtungen verfügen.

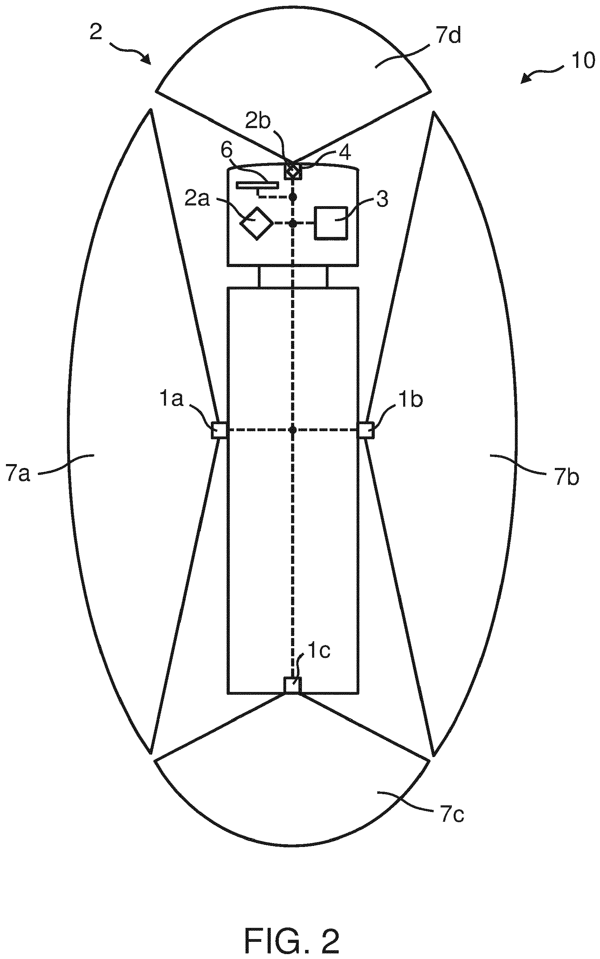

Figur 2 zeigt eine schematische Darstellung eines Kraftfahrzeugs 10 in Draufsicht gemäß einer zweiten Ausführungsform der Erfindung. Auch hier handelt es sich bei dem Kraftfahrzeug 10 wiederum um ein Sattelkraftfahrzeug, d. h. ein Nutzfahrzeug. Im Gegensatz zu der zuvor gezeigten Ausführungsform weist das in Figur 2 schematisch dargestellte Kraftfahrzeug 10 jedoch kein Spiegelersatz-System auf. Dagegen umfasst das Kraftfahrzeug 10 mehrere Bilderfassungseinrichtungen 1a, 1b, 1c und 4, deren Bilddaten über einen jeweiligen Umfeldbereich 7a, 7b, 7c, 7d miteinander verknüpfbar sind, um eine Birdview-Darstellung des Kraftfahrzeugs 10 zu erhalten. Der Ausdruck "Birdview-Darstellung" soll hierbei ein Bild, vorzugsweise ein komplettes Rundumbild, der Fahrzeugumgebung und/oder des Kraftfahrzeugs 10 aus der Vogelperspektive bezeichnen. Mit anderen Worten handelt es sich bei den vier Bilderfassungseinrichtungen 1a, 1b, 1c und 4 um einen Kameraverbund eines Birdview-Systems, wobei die Frontsichtkamera 4-im Gegensatz zu den Bilderfassungseinrichtungen 1a, 1b und 1c-über eine integrierte Recheneinheit 2b zur Objekterkennung verfügt. Bei der Frontsichtkamera 4 kann es sich somit vorliegend z. B. um eine "smarte" bzw. "intelligente" Kamera handeln.

Die sensorseitig integrierte Recheneinheit 2b der Frontsichtkamera 4 ist hierbei Teil einer vorliegend dezentral ausgebildeten Auswerteeinrichtung 2. Diese umfasst dazu neben der vorgenannten Recheneinheit 2b eine weitere Recheneinheit 2a, die jedoch nicht in eine Sensoreinrichtung integriert ist. Die dezentrale Auswerteeinrichtung 2 ist weiterhin ausgebildet, auf Basis von Sensordaten der vorhandenen Sensoreinrichtungen eine Objekterkennung durchzuführen. Die entsprechenden Berechnungen können dabei mittels der Recheneinheit 2a für sich, der Recheneinheit 2b für sich oder aber auch in einer Kombination der beiden Recheneinheit 2a und 2b durchgeführt werden.

Um festzulegen, welche der Recheneinheiten 2a und 2b, d. h. welche Teilmenge der Recheneinheiten 2a, 2b, aktuell zur Durchführung der Objekterkennung verwendet wird, umfasst das Kraftfahrzeug 10 weiterhin eine Steuereinrichtung 3. Diese ist ausgebildet, in Abhängigkeit vom Vorliegen einer vorbestimmen Betriebsbedingung eine Teilmenge der insgesamt vorhandenen Recheneinheiten 2a, 2b auszuwählen, mittels derer eine Auswertung der Sensordaten zur Objekterkennung erfolgt. Darüber hinaus ist die Steuereinrichtung 3 ausgebildet, in Abhängigkeit vom Vorliegen der vorbestimmen Betriebsbedingung eine Teilmenge der Sensoreinrichtungen auszuwählen, auf deren Basis die Objekterkennung erfolgt. Mit anderen Worten legt die Steuereinrichtung 3 somit sowohl fest, auf Basis welcher Sensoreinrichtungen die Objekterkennung erfolgt, als auch welche Recheneinheiten 2a, 2b hierzu verwendet werden. Beispielsweise kann die Steuereinrichtung 3 ausgebildet sein, im Falle einer Rückwärtsfahrt des Kraftfahrzeugs 10 die Bilderfassungseinrichtungen 1a, 1b und 1c des Birdview-Systems als die Teilmenge der Sensoreinrichtungen auszuwählen, auf deren Basis die Objekterkennung erfolgt und die Recheneinheit 2b der - aktuell nicht unmittelbar zur Objekterkennung genutzten - Frontsichtkamera 4 zur Durchführung der entsprechenden Datenauswertung festzulegen. Auf vorteilhafte Weise wird dadurch eine möglichst bedarfsgerechte Nutzung der vorhandenen Sensoreinrichtungen und Rechenkapazitäten erreicht.

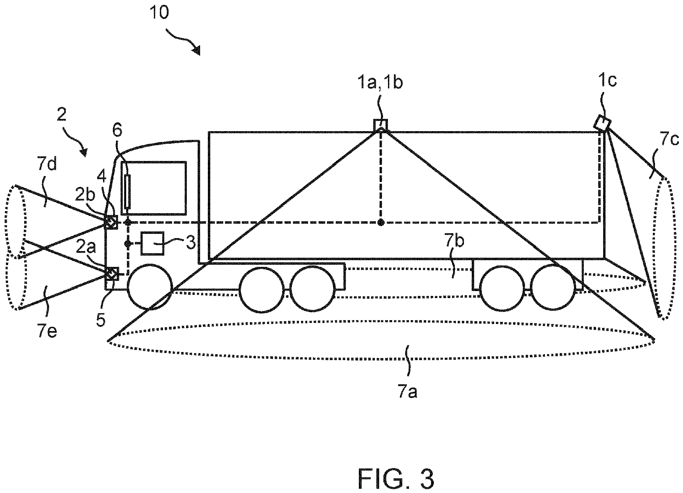

Figur 3 zeigt eine schematische Darstellung eines Kraftfahrzeugs 10 in Seitenansicht gemäß einer dritten Ausführungsform der Erfindung. Auch hier weist das Kraftfahrzeug ein Birdview-System auf, welches die vier Bilderfassungseinrichtungen 1a, 1b, 1c und 4 umfasst. Mittels des vorliegenden Birdview-Systems kann dem Fahrer auf der Anzeigeeinrichtung 6 ein (künstliches) Bild seiner Fahrzeugumgebung und/oder seines Kraftfahrzeugs 10 aus der Vogelperspektive geboten werden, wozu die Bilderfassungseinrichtungen 1a, 1b, 1c und 4 jeweils unterschiedliche Umfeldbereiche 7a,7b, 7c, 7d der Kraftfahrzeugs 10 erfassen.

Zusätzlich weist das Kraftfahrzeug 10 als weitere Sensoreinrichtung zur Umfelderfassung ein Frontradar 5 auf. Dieses Frontradar 5 verfügen dabei - wie auch die Frontkamera 4 des Bird-view-Systems - über eine integrierte Recheneinheit 2a, wobei die beiden Recheneinheiten 2a und 2b zusammen eine dezentrale Auswerteinrichtung 2 des Kraftfahrzeugs 10 bilden. Die Auswerteeinrichtung 2 ist dabei erneut dazu ausgebildet, auf Basis von Sensordaten der vorhandenen Sensoreinrichtungen eine Objekterkennung durchzuführen, wobei die Recheneinheit 2a und 2b einzeln oder in Kombination verwendet werden können.

Um eine situationsabhängige und damit effiziente Nutzung der vorhandenen Sensoreinrichtungen bzw. Recheneinheiten 2a, 2b zu erreichen, umfasst das Kraftfahrzeug 10 weiterhin eine Steuereinrichtung 3, die ausgebildet ist, festzulegen auf Basis welcher Sensoreinrichtungen aktuell eine Objekterkennung erfolgt und/oder welche der Recheneinheiten 2a und 2b hierzu verwendet wird. Beispielsweise kann die Steuereinrichtung 3 ausgebildet sein, im Falle einer Vorwärtsfahrt die Frontsichtkamera 4 und das Frontradar 5 als die Teilmenge der Sensoreinrichtungen auszuwählen, auf deren Basis die Objekterkennung erfolgt. Die Sensordaten des Birdview-Systems werden dann lediglich auf der Anzeigeeinrichtung 6 angezeigt, ohne das eine Objekterkennung auf Basis dieser Sensordaten erfolgt. Im Falle einer Rückwärtsfahrt kann die Steuereinrichtung 3 dann ausgebildet sein, die Bilderfassungseinrichtung 1c als die Teilmenge der Sensoreinrichtungen auszuwählen, auf deren Basis die Objekterkennung erfolgt, während die Sensordaten der Frontsichtkamera und des Frontradars nicht zur Objekterkennung verwendet werden, um Rechenkapazität zu sparen. Auf vorteilhafte Weise wird dadurch insgesamt eine bedarfsgerechte Nutzung der vorhandenen Sensoreinrichtungen zur Umfelderfassung erreicht, da durch das Verzichten auf eine Auswertung aktuell weniger relevante Umfeldbereiche Rechenkapazität eingespart werden kann. Weiterhin können die vorhandenen Rechenkapazitäten effektiv genutzt werden, da z. B. im obigen Beispiel der Rückwärtsfahrt, die Recheneinheiten 2a bzw. 2b der aktuell nicht zur Objekterkennung verwendeten Frontsichtkamera 4 bzw. des Frontradars 5 genutzt werden können. Entsprechend kann bei der Ausgestaltung der Bilderfassungseinrichtungen 1a, 1b und 1c des Birdview-Systems auf eigene, d. h. integrierte, Recheneinheiten dieser Sensoreinrichtungen verzichtet werden.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1a, 1b, 1c: Bilderfassungseinrichtung
- 2: Auswerteeinrichtung
- 2a, 2b: Recheneinheiten
- 3: Steuereinrichtung
- 4: Frontsichtkamera
- 5: Frontradar
- 6: Anzeigeeinrichtung
- 7a, 7b, 7c, 7d, 7e: Umfeldbereich
- 10: Kraftfahrzeug

## Patentansprüche

1. Kraftfahrzeug (10), vorzugsweise Nutzfahrzeug, aufweisend
eine Mehrzahl von Sensoreinrichtungen zur Umfelderfassung, wobei die Mehrzahl von Sensoreinrichtungen zumindest eine Bilderfassungseinrichtung (1a, 1b, 1c) eines Birdview- oder Spiegelersatz-Systems umfasst; und
eine Auswerteeinrichtung (2), die ausgebildet ist, auf Basis von Sensordaten der Mehrzahl von Sensoreinrichtungen eine Objekterkennung durchzuführen; **gekennzeichnet durch**
eine Steuereinrichtung (3), die ausgebildet ist, in Abhängigkeit von einem Vorliegen einer vorbestimmen Betriebsbedingung eine Teilmenge der Mehrzahl von Sensoreinrichtungen auszuwählen, auf deren Basis die Objekterkennung erfolgt.

2. Kraftfahrzeug (10) nach Anspruch 1, **dadurch gekennzeichnet, dass** die vorbestimmte Betriebsbedingung eine vorbestimmte Fahrsituation ist, darunter ein Abbiegen, ein Anfahren, ein Rangieren, ein Vorwärtsfahren und/oder ein Rückwärtsfahren.

3. Kraftfahrzeug (10) nach einem der vorherigen Ansprüche, **dadurch gekennzeichnet, dass** die vorbestimmte Betriebsbedingung eine Gangwahl, ein Lenkradeinschlag und/oder eine Betätigung eines Fahrtrichtungsanzeigers des Kraftfahrzeugs ist.

4. Kraftfahrzeug (10) nach einem der vorherigen Ansprüche, **dadurch gekennzeichnet, dass** die Auswerteeinrichtung (2) als zentrale Auswerteeinrichtung ausgebildet ist und sensorseitig keine Sensordatenauswertung zur Objekterkennung erfolgt.

5. Kraftfahrzeug (10) nach einem der Ansprüche 1 bis 3, **dadurch gekennzeichnet, dass** die Auswerteeinrichtung (2) als dezentrale Auswerteeinrichtung ausgebildet ist, die eine Mehrzahl von dezentralen Recheneinheiten (2a, 2b) umfasst, und die Steuereinrichtung (3) ausgebildet ist, eine Teilmenge der Mehrzahl von dezentralen Recheneinheiten (2a, 2b) zur Durchführung der Objekterkennung festzulegen.

6. Kraftfahrzeug (10) nach einem Anspruch 5, **dadurch gekennzeichnet, dass** die Mehrzahl von dezentralen Recheneinheiten (2a, 2b) zumindest eine sensorseitig integrierte Recheneinheit umfasst, die ausgebildet ist, auf Basis von Sensordaten eine Objekterkennung durchzuführen.

7. Kraftfahrzeug (10) nach einem der Ansprüche 6, **dadurch gekennzeichnet, dass** zur Durchführung der Objekterkennung zumindest eine sensorseitig integrierte Recheneinheit einer Sensoreinrichtungen festgelegt wird, die nicht in der ausgewählten Teilmenge der Sensoreinrichtungen enthalten ist.

8. Kraftfahrzeug (10) nach einem der vorherigen Ansprüche, **dadurch gekennzeichnet, dass** die Auswerteeinrichtung (2) ausgebildet ist, die Sensordaten der ausgewählten Teilmenge der Mehrzahl von Sensoreinrichtungen zu einem gemeinsamen Umfeldmodell des Kraftfahrzeugs (10) zu fusionieren.

9. Kraftfahrzeug (10) nach einem der vorherigen Ansprüche, **dadurch gekennzeichnet, dass** die Mehrzahl von Sensoreinrichtungen zumindest eine Frontsichtkamera (4) und/oder ein Frontradar (5) umfasst.

10. Kraftfahrzeug (10) nach Anspruch 9, **dadurch gekennzeichnet, dass** die Steuereinrichtung (3) ausgebildet ist,
a) im Falle einer Vorwärtsfahrt des Kraftfahrzeugs (10) ausschließlich die Frontsichtkamera (4) und/oder das Frontradar (5) als Teilmenge der Sensoreinrichtungen auszuwählen, auf deren Basis die Objekterkennung erfolgt, wobei ein Anzeigen von Bilddaten der zumindest einen Bilderfassungseinrichtung (1a, 1b, 1c) des Birdview- oder Spiegelersatz-Systems erfolgt; und/oder
b) im Falle eines Abbiegevorgangs des Kraftfahrzeugs (10) ausschließlich die zumindest eine Bilderfassungseinrichtung (1a, 1b, 1c) des Birdview- oder Spiegelersatz-Systems und die Frontsichtkamera (4) und/oder das Frontradar (5) als Teilmenge der Sensoreinrichtungen auszuwählen, auf deren Basis die Objekterkennung erfolgt; und/oder
c) im Falle einer Rückwärtsfahrt des Kraftfahrzeugs (10) ausschließlich die zumindest eine Bilderfassungseinrichtung (1a, 1b, 1c) eines Birdview- oder Spiegelersatz-Systems als Teilmenge der Sensoreinrichtungen auszuwählend, auf deren Basis die Objekterkennung erfolgt.

11. Kraftfahrzeug (10) nach Anspruch 9 oder 10, **dadurch gekennzeichnet, dass** die Frontsichtkamera (4) und/oder das Frontradar (5) eine sensorseitig integrierte Recheneinheit umfasst, die jeweils ausgebildet ist, auf Basis von Sensordaten der Mehrzahl von Sensoreinrichtungen eine Objekterkennung durchzuführen.

12. Kraftfahrzeug (10) nach Anspruch 11, **dadurch gekennzeichnet, dass** die Steuereinrichtung (3) ausgebildet ist,
a) im Falle einer Rückwärtsfahrt des Kraftfahrzeugs (10) ausschließlich die zumindest eine Bilderfassungseinrichtung (1a, 1b, 1c) des Birdview- oder Spiegelersatz-Systems als Teilmenge der Sensoreinrichtungen auszuwählen, auf deren Basis die Objekterkennung erfolgt; und
b) die Recheneinheit der Frontsichtkamera (4) und/oder des Frontradars (5) zur Durchführung der Objekterkennung festzulegen.

13. Kraftfahrzeug (10) nach einem der vorherigen Ansprüche, **dadurch gekennzeichnet, dass** die Mehrzahl von Sensoreinrichtungen zumindest eine Sensorik zur Totraumüberwachung vor dem Kraftfahrzeug und/oder zumindest ein Seitenradar umfasst.

14. Kraftfahrzeug (10) nach Anspruch 13, **dadurch gekennzeichnet, dass** die Steuereinrichtung (3) ausgebildet ist, im Falle eines Anfahrens des Kraftfahrzeugs (10) ausschließlich die zumindest eine Sensorik zur Totraumüberwachung vor dem Kraftfahrzeug und/oder das zumindest eine Seitenradar als Teilmenge der Sensoreinrichtungen auszuwählen, auf deren Basis die Objekterkennung erfolgt.
